# EUROPEAN PATENT APPLICATION

(11) **EP 3 531 222 A1**
(43) Date of publication of application: **28.08.2019**
(21) Application number: 17832182.4
(22) Date of filing: 26.12.2017
(51) Int. Cl.: G05D 1/10, G08G 5/00, G05D 1/00

(54) **PATH PLANNING METHOD AND DEVICE FOR UNMANNED AERIAL VEHICLE, AND FLIGHT MANAGEMENT METHOD AND DEVICE**

(71) Applicant: Autel Robotics Co., Ltd., Shenzhen, Guangdong 518055 (CN)
(72) Inventor: ZHANG, Ke, Shenzhen, Guangdong 518055 (CN); ZANG, Bo, Shenzhen, Guangdong 518055 (CN)
(74) Representative: Gulde & Partner
(86) International application number: PCT/CN2017/118647
(87) International publication number: WO 2019/127019

(57) **Abstract**

Embodiments of the present invention relate to a path planning method and apparatus for an unmanned aerial vehicle, a flight management method and apparatus and an unmanned aerial vehicle. The method includes: determining a start point and an end point of flight of the unmanned aerial vehicle; determining a flight route of the unmanned aerial vehicle based on the start point and the end point; obtaining a height of an obstacle on the flight route; determining whether a height at which the unmanned aerial vehicle is capable of flying is greater than the height of the obstacle; and if yes, flying, by the unmanned aerial vehicle, at a height greater than the height of the obstacle according to the flight route. According to the embodiments of the present invention, height information of an obstacle on a flight route of an unmanned aerial vehicle is obtained and whether a height at which the unmanned aerial vehicle is capable of flying is greater than a height of the obstacle is determined. If the height at which the unmanned aerial vehicle is capable of flying is greater than the height of the obstacle, the unmanned aerial vehicle can fly at a height greater than the height of the obstacle according to the flight route. Therefore, the unmanned aerial vehicle is precisely controlled.

## Description

### Technical Field

Embodiments of the present invention relate to the field of unmanned aerial vehicle technologies, for example, to a path planning method and apparatus for an unmanned aerial vehicle, a flight management method and apparatus, an unmanned aerial vehicle and a flight management system.

### Related Art

With the development of unmanned aerial vehicle technologies, unmanned aerial vehicles are widely applied to both the military field and the civil field. Currently, an unmanned aerial vehicle can implement autonomous flight according to a route planned by a two-dimensional map. During the autonomous flight, the unmanned aerial vehicle needs to continuously detect a height of an obstacle ahead and then avoid the obstacle by maintaining a horizontal projection location unchanged and elevating a flight height.

During implementation of the present invention, it is found that at least the following problems exist in the prior art: Because a two-dimensional map only includes horizontal projection information of an obstacle, and does not include height information, flight of an unmanned aerial vehicle cannot be precisely controlled according to the height information of the obstacle.

### SUMMARY

An objective of embodiments of the present invention is to provide a path planning method and apparatus for an unmanned aerial vehicle, a flight management method and apparatus, an unmanned aerial vehicle and a flight management system, so as to precisely control an unmanned aerial vehicle according to a height of an obstacle on a flight route of the unmanned aerial vehicle.

According to a first aspect, an embodiment of the present invention provides a path planning method for an unmanned aerial vehicle. The method includes:
determining a start point and an end point of flight of the unmanned aerial vehicle;
determining a flight route of the unmanned aerial vehicle based on the start point and the end point;
obtaining a height of an obstacle on the flight route;
determining whether a height at which the unmanned aerial vehicle is capable of flying is greater than the height of the obstacle; and
if yes, flying, by the unmanned aerial vehicle, at a height greater than the height of the obstacle according to the flight route.

In one embodiment, the determining a flight route of the unmanned aerial vehicle based on the start point and the end point includes:
obtaining a flight map of the unmanned aerial vehicle; and
obtaining the flight route of the unmanned aerial vehicle designed by a user according to the start point and the end point on the flight map.

In one embodiment, the obtaining the flight route of the unmanned aerial vehicle designed by a user according to the start point and the end point on the flight map includes:
obtaining a flight track that is located between the start point and the end point and that is drawn by the user on the flight map; and
determining the flight route according to the start point, the end point and the flight track.

In one embodiment, the obtaining the flight route of the unmanned aerial vehicle designed by a user according to the start point and the information on the flight map includes:
obtaining at least one waypoint that is located between the start point and the end point and that is selected by the user on the flight map; and
determining the flight route according to the start point, the end point and the at least one waypoint.

In one embodiment, the method further includes:
determining whether there is a special flight area on the flight route; and
if yes, flying , by the unmanned aerial vehicle, to avoid the special flight area.

In one embodiment, the flying, by the unmanned aerial vehicle, to avoid the special flight area includes:
obtaining a height of the special flight area; and
flying, by the unmanned aerial vehicle, at a height greater than or less than the height of the special flight area.

In one embodiment, the flying, by the unmanned aerial vehicle, to avoid the special flight area includes:
obtaining a boundary of the special flight area; and
flying, by the unmanned aerial vehicle, to avoid the boundary of the special flight area.

In one embodiment, the method further includes:
sending a prompt warning to a control terminal if there is a special flight area on the flight route.

In one embodiment, the obtaining a height of an obstacle on the flight route includes:
obtaining the height of the obstacle on the flight route by using a three-dimensional map.

In one embodiment, the determining a flight route of the unmanned aerial vehicle based on the start point and the end point includes:
obtaining at least one path planning criterion; and
determining the flight route of the unmanned aerial vehicle based on the start point and the end point according to the at least one path planning criterion.

In one embodiment, the at least one path planning criterion includes at least one of the following criteria:
a minimum-energy criterion, a highest-flight-speed criterion, a highest-flight-safety criterion and a special-flight-area avoidance criterion.

In one embodiment, the at least one path planning criterion includes the special-flight-area avoidance criterion.

In one embodiment, the special flight area includes any of the following areas:
a no-fly zone, a height restricted area and an area that affects a flight task of the unmanned aerial vehicle.

In one embodiment, the determining whether a height at which the unmanned aerial vehicle is capable of flying is greater than the height of the obstacle includes:
determining whether there is a height restricted area on the flight route;
if yes, determining whether a height of the height restricted area is greater than a maximum height of the obstacle on the flight route; and
if yes, determining that the height at which the unmanned aerial vehicle is capable of flying is greater than the height of the obstacle.

In one embodiment, the determining whether a height at which the unmanned aerial vehicle is capable of flying is greater than the height of the obstacle includes:
determining whether a maximum height at which the unmanned aerial vehicle flies is greater than the height of the obstacle; and
if yes, determining that the height at which the unmanned aerial vehicle is capable of flying is greater than the height of the obstacle.

In one embodiment, the maximum height at which the unmanned aerial vehicle flies depends on a lifting force provided by an actuating apparatus of the unmanned aerial vehicle.

In one embodiment, the method further includes:
flying, by the unmanned aerial vehicle, to avoid the obstacle laterally if the height at which the unmanned aerial vehicle is capable of flying is less than the height of the obstacle.

In one embodiment, the obstacle includes at least one of the following:
a building, a mountain, a tree, a forest and a signal tower.

According to a second aspect, an embodiment of the present invention further provides a path planning apparatus for an unmanned aerial vehicle. The apparatus includes:
a determining module, configured to determine a start point and an end point of flight of the unmanned aerial vehicle; and
to determine a flight route of the unmanned aerial vehicle based on the start point and the end point;
an obtaining module, configured to obtain a height of an obstacle on the flight route;
a judging module, configured to determine whether a height at which the unmanned aerial vehicle is capable of flying is greater than the height of the obstacle; and
a control module, configured to control the unmanned aerial vehicle to fly at a height greater than the height of the obstacle according to the flight route.

In one embodiment, the determining module is specifically configured to:
obtain a flight map of the unmanned aerial vehicle; and
obtain the flight route of the unmanned aerial vehicle designed by a user according to the start point and the end point on the flight map.

In one embodiment, the determining module is configured to:
obtain a flight track that is located between the start point and the end point and that is drawn by the user on the flight map; and
determine the flight route according to the start point, the end point and the flight track.

In one embodiment, the determining module is configured to:
obtain at least one waypoint that is located between the start point and the end point and that is selected by the user on the flight map; and
determine the flight route according to the start point, the end point and the at least one waypoint.

In one embodiment, the judging module is further configured to:
determine whether there is a special flight area on the flight route; and
if yes, the control module controls the unmanned aerial vehicle to fly to avoid the special flight area.

In one embodiment, the obtaining module is further configured to obtain a flight height of the special flight area; and the control module is configured to control the unmanned aerial vehicle to fly at a height greater than or less than the height of the special flight area.

In one embodiment, the obtaining module is further configured to obtain a boundary of the special flight area; and the control module is configured to control the unmanned aerial vehicle to fly to avoid the boundary of the special flight area.

In one embodiment, a prompt warning is sent to a control terminal if the judging module determines that there is a special flight area on the flight route.

In one embodiment, the obtaining module obtains height information of the obstacle on the flight route by using a three-dimensional map.

In one embodiment, the determining module is configured to:
obtain at least one path planning criterion; and
determine the flight route of the unmanned aerial vehicle based on the start point and the end point according to the at least one path planning criterion.

In one embodiment, the at least one path planning criterion includes at least one of the following criteria:
a minimum-energy criterion, a highest-flight-speed criterion, a highest-flight-safety criterion and a special-flight-area avoidance criterion.

In one embodiment, the at least one path planning criterion includes the special-flight-area avoidance criterion.

In one embodiment, the special flight area includes any of the following areas:
a no-fly zone, a height restricted area and an area that affects a flight task of the unmanned aerial vehicle.

In one embodiment, the judging module is specifically configured to:
determine whether there is a height restricted area on the flight route;
if yes, determine whether a height of the height restricted area is greater than a maximum height of the obstacle on the flight route; and
if yes, determine that the height at which the unmanned aerial vehicle is capable of flying is greater than the height of the obstacle.

In one embodiment, the judging module is specifically configured to:
determine whether a maximum height at which the unmanned aerial vehicle flies is greater than the height of the obstacle; and
if yes, determine that the height at which the unmanned aerial vehicle is capable of flying is greater than the height of the obstacle.

In one embodiment, the maximum height at which the unmanned aerial vehicle flies depends on a lifting force provided by an actuating apparatus of the unmanned aerial vehicle.

In one embodiment, the control module controls the unmanned aerial vehicle to fly to avoid the obstacle laterally if the judging module determines that the height at which the unmanned aerial vehicle is capable of flying is less than the height of the obstacle.

In one embodiment, the obstacle includes at least one of the following:
a building, a mountain, a tree, a forest and a signal tower.

According to a third aspect, an embodiment of the present invention further provides a flight management method. The method includes:
obtaining flight state information and flight routes of at least two unmanned aerial vehicles within a management range;
determining that there is an interference area on the flight routes of the at least two unmanned aerial vehicles;
determining whether a difference between time periods in which the at least two unmanned aerial vehicles reach the interference area is less than a preset threshold; and
if yes, performing coordinate control on the at least two unmanned aerial vehicles, so as to prevent the difference between the time periods in which the at least two unmanned aerial vehicles reach the interference area from being less than the preset threshold.

In one embodiment, the obtaining flight routes of at least two unmanned aerial vehicles within a management range includes:
receiving a flight route sent by each of the at least two unmanned aerial vehicles.

In one embodiment, the method further includes:
receiving signals sent by the at least two unmanned aerial vehicles; and
obtaining control permission on the at least two unmanned aerial vehicles.

In one embodiment, the receiving signals sent by the at least two unmanned aerial vehicles includes:
receiving signals sent by the at least two unmanned aerial vehicles when flight heights of the at least two unmanned aerial vehicles are greater than a preset height threshold.

In one embodiment, the performing coordinate control on the at least two unmanned aerial vehicles includes:
performing coordinate control on speed magnitudes of the at least two unmanned aerial vehicles, so that the difference between the time periods in which the at least two unmanned aerial vehicles reach the interference area is greater than or equal to the preset threshold.

In one embodiment, the performing coordinate control on the at least two unmanned aerial vehicles includes:
performing coordinate control on speed directions of the at least two unmanned aerial vehicles, so that the difference between the time periods in which the at least two unmanned aerial vehicles reach the interference area is greater than or equal to the preset threshold.

In one embodiment, the flight state information includes location information and speed information.

According to a fourth aspect, an embodiment of the present invention further provides a flight management apparatus. The apparatus includes:
an obtaining module, configured to obtain flight state information and flight routes of at least two unmanned aerial vehicles within a management range;
a determining module, configured to determine that there is an interference area on the flight routes of the at least two unmanned aerial vehicles;
a judging module, configured to determine whether a difference between time periods in which the at least two unmanned aerial vehicles reach the interference area is less than a preset threshold; and
a control module, configured to perform coordinate control on the at least two unmanned aerial vehicles, so as to prevent the difference between the time periods in which the at least two unmanned aerial vehicles reach the interference area from being less than the preset threshold.

In one embodiment, the obtaining module further includes a receiving module, the receiving module being configured to receive a flight route sent by each of the at least two unmanned aerial vehicles.

In one embodiment, the obtaining module is further configured to:
receive signals sent by the at least two unmanned aerial vehicles; and
obtain control permission on the at least two unmanned aerial vehicles.

In one embodiment, the obtaining module is specifically configured to:
receive signals sent by the at least two unmanned aerial vehicles when flight heights of the at least two unmanned aerial vehicles are greater than a preset height threshold.

In one embodiment, the control module is configured to:
perform coordinate control on speed magnitudes of the at least two unmanned aerial vehicles, so that the difference between the time periods in which the at least two unmanned aerial vehicles reach the interference area is greater than or equal to the preset threshold.

In one embodiment, the control module is configured to:
perform coordinate control on speed directions of the at least two unmanned aerial vehicles, so that the difference between the time periods in which the at least two unmanned aerial vehicles reach the interference area is greater than or equal to the preset threshold.

In one embodiment, the flight state information includes location information and speed information.

According to a fifth aspect, an embodiment of the present invention further provides an unmanned aerial vehicle. The unmanned aerial vehicle includes:
a shell;
an arm connected to the shell;
a processor disposed in the shell or the arm; and
a memory in communication connection with the processor, the memory being disposed in the shell or the arm, where
the memory stores instructions capable of being executed by the processor; and when the processor executes the instructions, the foregoing path planning method for an unmanned aerial vehicle is implemented.

According to a sixth aspect, an embodiment of the present invention further provides a non-volatile computer readable storage medium, where the computer readable storage medium stores computer executable instructions, the computer executable instructions, when executed by an unmanned aerial vehicle, causing the unmanned aerial vehicle to perform the foregoing path planning method for an unmanned aerial vehicle.

According to a seventh aspect, an embodiment of the present invention further provides a flight management apparatus. The apparatus includes:
a main body;
a display screen disposed on the main body;
a processor disposed in the main body;
a transceiver in communication connection with the processor; and
a memory in communication connection with the processor, where
the memory stores instructions capable of being executed by the processor; and when the processor executes the instructions, the foregoing flight management method is implemented.

According to an eighth aspect, an embodiment of the present invention further provides a computer program product, where the computer program product includes a computer program stored in a non-volatile computer readable storage medium, and the computer program includes program instructions, the program instructions, when executed by a flight management system, causing the flight management system to perform the foregoing flight management method.

The path planning method and apparatus for an unmanned aerial vehicle, the flight management method and apparatus, the unmanned aerial vehicle and the flight management system provided in the embodiments of the present invention, by obtaining height information of an obstacle on a flight route of an unmanned aerial vehicle and determining whether a height at which the unmanned aerial vehicle is capable of flying is greater than a height of the obstacle, if the height at which the unmanned aerial vehicle is capable of flying is greater than the height of the obstacle, control the unmanned aerial vehicle to fly at a height greater than the height of the obstacle according to the flight route, therefore, precisely control the unmanned aerial vehicle.

### BRIEF DESCRIPTION OF THE DRAWINGS

Exemplary descriptions of one or more embodiments are provided through accompanying drawings corresponding to the one or more embodiments. These exemplary descriptions do not constitute any limitation on the embodiments. Elements having identical reference numerals in the drawings represent similar elements. Unless particularly stated, figures in the accompanying drawings do not constitute any proportional limitation.
FIG. 1 is a schematic diagram of an application scenario of a path planning method and apparatus for an unmanned aerial vehicle or a flight management method or apparatus according to an embodiment of the present invention;
FIG. 2 is a flowchart of a path planning method for an unmanned aerial vehicle according to an embodiment of the present invention;
FIG. 3 is a flowchart of a step of determining a flight route in the path planning method for an unmanned aerial vehicle shown in FIG. 2 according to an embodiment of the present invention;
FIG. 4 is a flowchart of the step of determining a flight route in the path planning method for an unmanned aerial vehicle shown in FIG. 2 according to another embodiment of the present invention;
FIG. 5 is a flowchart of a step of avoiding a special flight area in the path planning method for an unmanned aerial vehicle shown in FIG. 2 according to an embodiment of the present invention;
FIG. 6 is a structural block diagram of a path planning apparatus for an unmanned aerial vehicle according to an embodiment of the present invention;
FIG. 7 is a flowchart of a flight management method according to an embodiment of the present invention;
FIG. 8 is a structural block diagram of a flight management apparatus according to an embodiment of the present invention;
FIG. 9 is a structural block diagram of a flight management apparatus according to another embodiment of the present invention;
FIG. 10 is a schematic diagram of a hardware structure of an unmanned aerial vehicle according to an embodiment of the present invention; and
FIG. 11 is a schematic diagram of a hardware structure of a flight management apparatus according to an embodiment of the present invention.

### DETAILED DESCRIPTION

To make the objectives, technical solutions and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

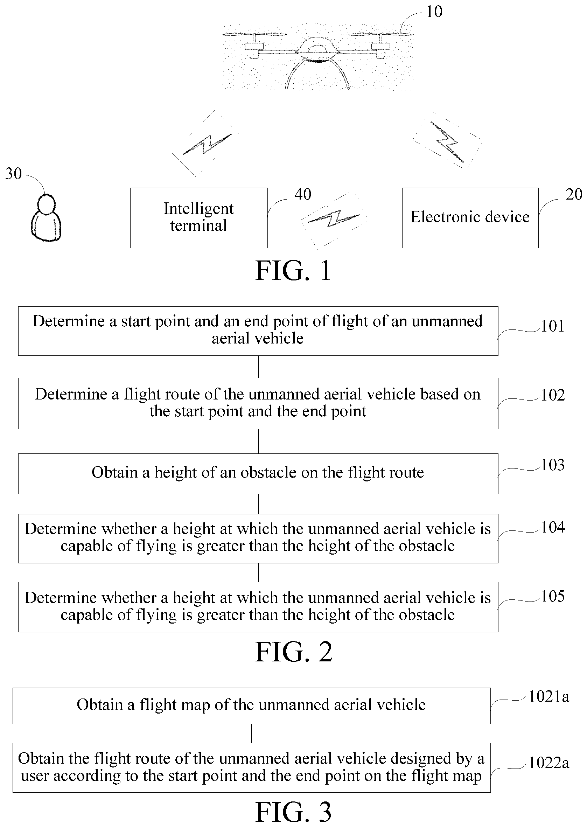

A path planning method and apparatus for an unmanned aerial vehicle and a flight management method and apparatus provided in the embodiments of the present invention are applicable to an application scenario shown in FIG. 1. The application scenario shown in FIG. 1 includes an unmanned aerial vehicle 10, an electronic device 20, a user 30 and an intelligent terminal 40. The unmanned aerial vehicle 10 may be any appropriate type of high-altitude or low-altitude aerial vehicle including a typical quadrotor, a remote control helicopter that can hover, a fixed-wing aerial vehicle having a particular movement speed or the like. The electronic device 20 may be, for example, a large-scale server, a personal computer, a portable computer, a smartphone or a tablet computer. The intelligent terminal 40 is, for example, a remote control, a smartphone or a tablet computer.

The user 30 may interact with the intelligent terminal 40 by using one or more input devices of any appropriate type. These input devices may be a mouse, a key, a touchscreen and the like. Communication connections may be established between the unmanned aerial vehicle 10 and the intelligent terminal 40, between the intelligent terminal 40 and the electronic device 20 and between the unmanned aerial vehicle 10 and the electronic device 20 by using respective wireless communications modules (for example, a signal receiver or a signal transmitter) that are separately disposed internally, to upload or deliver data/instructions.

It should be noted that, during actual application, the application scenario may further include more unmanned aerial vehicles 10, more electronic devices 20 and more intelligent terminals 40.

The user 30 may enter a start point and an end point of the unmanned aerial vehicle 10 to the intelligent terminal 40 by using an input device. The intelligent terminal 40 sends the start point and the end point to the electronic device 20 or the unmanned aerial vehicle 10. The electronic device 20, the intelligent terminal 40 or the unmanned aerial vehicle 10 determines a flight route of the unmanned aerial vehicle 10 according to the start point and the end point, obtains a height of an obstacle (for example, a building, a mountain, a tree, a forest or a signal tower) on the flight route and then determines whether a height at which the unmanned aerial vehicle 10 is capable of flying is greater than the height of the obstacle. If the height at which the unmanned aerial vehicle 10 is capable of flying is greater than the height of the obstacle, the unmanned aerial vehicle 10 can fly at a height greater than the height of the obstacle according to the flight route. In an embodiment of the present invention, the height of the obstacle on the flight route may be obtained from a three-dimensional map. The three-dimensional map may be loaded into the electronic device 20, the intelligent terminal 40 or the unmanned aerial vehicle 10 in advance. Alternatively, the electronic device 20 or the intelligent terminal 40 may obtain the three-dimensional map in real time by using a network.

The electronic device 20 may further obtain flight state information (for example, location information and speed information) and flight routes of a plurality of unmanned aerial vehicles 10 and confirm whether flight of the plurality of unmanned aerial vehicles 10 interferes with each other. If the flight of the plurality of unmanned aerial vehicles 10 interferes with each other, the electronic device 20 performs coordinate control on the plurality of unmanned aerial vehicles 10, to avoid collision incidents between the unmanned aerial vehicles 10.

An embodiment of the present invention provides a path planning method for an unmanned aerial vehicle. Each of the electronic device 20, the intelligent terminal 40 and the unmanned aerial vehicle 10 in FIG. 1 may perform the method. As shown in FIG. 2, the planning method includes the following steps.

101: Determine a start point and an end point of flight of the unmanned aerial vehicle 10.

The start point and the end point may be entered by the user 30 to the intelligent terminal 40 by using an input device (for example, a keyboard or a touchscreen) and then sent by the intelligent terminal 40 to the electronic device 20 or the unmanned aerial vehicle 10.

102: Determine a flight route of the unmanned aerial vehicle 10 based on the start point and the end point.

In some embodiments, the flight route of the unmanned aerial vehicle 10 may be set by the user. As shown in FIG. 3, the determining a flight route of the aerial vehicle based on the start point and the end point further includes the following steps.

1021 a: Obtain a flight map of the unmanned aerial vehicle.

In an embodiment of the present invention, the flight map may be a three-dimensional map. The three-dimensional map may be loaded into the electronic device 20, the intelligent terminal 40 or the unmanned aerial vehicle 10 in advance or obtained by the electronic device 20 or the intelligent terminal 40 from a network in real time. The three-dimensional map may be a map of a city or a region and includes three-dimensional information of each obstacle (that is, a building). The three-dimensional information includes location information (for example, a horizontal coordinate such as longitude or latitude), height information and horizontal projection information (for example, a length or a width).

1022a: Obtain the flight route of the unmanned aerial vehicle designed by a user according to the start point and the end point on the flight map.

In an embodiment of the present invention, the start point, the end point and the flight map may be displayed to the user 30 on a screen of the intelligent terminal 40. The user 30 may draw at least one waypoint (waypoint) between the start point and the end point on the flight map or draw a flight track between the start point and the end point on the flight map. The intelligent terminal 40 converts each point in the flight track drawn by the user on the display screen or a screen location of each flight waypoint into coordinates in the flight map and then forms the flight route of the unmanned aerial vehicle 10 according to each coordinate point in the flight map. The unmanned aerial vehicle 10 or the electronic device 20 may obtain the flight route by using the intelligent terminal 40.

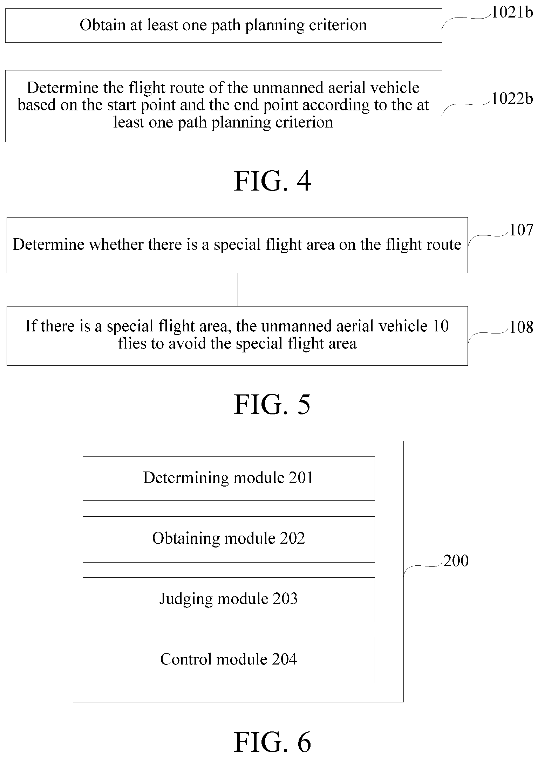

In other possible embodiments, the flight route of the unmanned aerial vehicle 10 may be autonomously planned by the electronic device 20, the intelligent terminal 40 or the unmanned aerial vehicle 10. As shown in FIG. 4, the determining a flight route of the aerial vehicle based on the start point and the end point includes the following steps.

1021b: Obtain at least one path planning criterion.

1022b: Determine the flight route of the unmanned aerial vehicle based on the start point and the end point according to the at least one path planning criterion.

In an embodiment of the present invention, the electronic device 20, the intelligent terminal 40 or the unmanned aerial vehicle 10 may plan the flight route of the unmanned aerial vehicle 10 based on the three-dimensional map. In other words, a flight route corresponding to each path planning criterion is planned for the unmanned aerial vehicle 10 based on the start point and the end point, by using a three-dimensional space path planning method and according to each path planning criterion, so that the planned flight route satisfies the corresponding path planning criterion.

The path planning criterion includes at least one of a minimum-energy criterion, a highest-flight-speed criterion, a highest-flight-safety criterion and a special-flight-area avoidance criterion. The special flight area includes at least one of or a combination of at least two of the following areas: a no-fly zone, a height restricted area, a flight noise sensitive area and an area that affects a flight task of the unmanned aerial vehicle 10 (for example, a strong electromagnetic area). It can be understood that, an exclusive criteria such as the minimum-energy criterion, the highest-flight-speed criterion and the highest-flight-safety criterion can only appear alone, and a non-exclusive criterion like the special-flight-area avoidance criterion may be used in combination with another criterion. For example, the electronic device 20, the intelligent terminal 40 or the unmanned aerial vehicle 10 may plan a flight route for the unmanned aerial vehicle 10 based on the minimum-energy criterion only, may plan a flight route for the unmanned aerial vehicle 10 based on the highest-flight-speed criterion only, or may plan a flight route for the unmanned aerial vehicle 10 based on both the minimum-energy criterion and the special-flight-area avoidance criterion.

Selection of various criteria may be set according to actual use of the unmanned aerial vehicle 10 and may be set by the user 30 on the intelligent terminal 40, and then the intelligent terminal 40 sends a setting result to the electronic device 20 or the unmanned aerial vehicle 10. For example, only the highest-flight-speed criterion may be set on the intelligent terminal 40, or three route planning criteria that is, the minimum-energy criterion, a combination of the highest-flight-speed criterion and the special-flight-area avoidance criterion and the highest-flight-speed criterion may be set at the same time. On an occasion including the foregoing three route planning criteria, the electronic device 20, the intelligent terminal 40 or the unmanned aerial vehicle 10 plans three flight routes for the unmanned aerial vehicle 10 respectively according to the foregoing three route planning criteria, and the user 30 may select one flight route from the three flight routes as the flight route of the unmanned aerial vehicle 10.

Optionally, one of the foregoing two modes of designing a flight route autonomously and designing a flight route by a user may be freely selected by the user 30 on the intelligent terminal 40.

103: Obtain a height of an obstacle on the flight route.

In an embodiment of the present invention, the height of the obstacle on the flight route may be obtained by using the three-dimensional map. There may be one or more obstacles.

104: Determine whether a height at which the unmanned aerial vehicle 10 is capable of flying is greater than the height of the obstacle.

Currently, many cities impose a restriction requirement on a flight height of the unmanned aerial vehicle 10. If a safety height to pass over an obstacle is greater than a restricted height, the unmanned aerial vehicle 10 cannot complete flight. Therefore, when whether the height at which the unmanned aerial vehicle 10 is capable of flying is greater than the height of the obstacle is determined, whether the restricted height is greater than a maximum height of each obstacle needs to be determined. Specifically, whether there is a height restricted area on a flight route is determined first. If there is a height restricted area, whether a height of the height restricted area is greater than a maximum height of the obstacle on the flight route is determined. If the height of the height restricted area is greater than the maximum height, it is determined that the height at which the unmanned aerial vehicle 10 is capable of flying is greater than the height of the obstacle.

Optionally, if the obstacle is at a high height, it needs to be further determined whether power of the unmanned aerial vehicle is sufficient for the unmanned aerial vehicle 10 to fly at a height greater than the height of the obstacle. That is, the determining whether a height at which the unmanned aerial vehicle 10 is capable of flying is greater than the height of the obstacle further includes:
determining whether a maximum height at which the unmanned aerial vehicle flies is greater than the height of the obstacle; and
if yes, determining that the height at which the unmanned aerial vehicle is capable of flying is greater than the height of the obstacle.

The maximum height at which the unmanned aerial vehicle 10 flies depends on a lifting force provided by an actuating apparatus of the unmanned aerial vehicle and/or the remaining power of a battery.

105: The unmanned aerial vehicle 10 flies at a height greater than the height of the obstacle according to the flight route if the height at which the unmanned aerial vehicle 10 is capable of flying is greater than the height of the obstacle.

The unmanned aerial vehicle 10 flies to avoid the obstacle laterally if the height at which the unmanned aerial vehicle 10 is capable of flying is less than the height of the obstacle.

The embodiment of the present invention, by obtaining height information of an obstacle on a flight route of an unmanned aerial vehicle and determining whether a height at which the unmanned aerial vehicle is capable of flying is greater than a height of the obstacle, if the height at which the unmanned aerial vehicle is capable of flying is greater than the height of the obstacle, control the unmanned aerial vehicle can fly at a height greater than the height of the obstacle according to the flight route, therefore, precisely control the unmanned aerial vehicle.

It should be noted that, in addition to being applicable to an occasion on which the unmanned aerial vehicle 10 autonomously flies, the method is also applicable to a flight control occasion. The method is particularly applicable to an occasion on which the unmanned aerial vehicle 10 needs to perform low-altitude flight and is also applicable to a high-altitude flight occasion.

On an occasion on which a flight route is set by the user 30, when planning a flight route, the user 30 may not consider any special flight area. Therefore, the flight route planned by the user 30 may pass through some special flight areas. Therefore, in other possible embodiments, as shown in FIG. 5, the method further includes the following steps.

107: Determine whether there is a special flight area on the flight route.

The special flight area includes at least one of or a combination of at least two of the following areas:
a no-fly zone, a height restricted area, an area that affects a flight task of the unmanned aerial vehicle (for example, a strongly electromagnetic area) and the like.

108: If there is a special flight area, the unmanned aerial vehicle 10 flies to avoid the special flight area.

In an embodiment of the present invention, when the special flight area is a no-fly zone, if the no-fly zone is a low-altitude area, the unmanned aerial vehicle 10 may obtain a height of the no-fly zone, so as to fly at a height greater than the no-fly zone. If the no-fly zone is a high-altitude area, the unmanned aerial vehicle 10 flies at a height less than a height of the no-fly zone. In others embodiments of the present invention, the unmanned aerial vehicle 10 may further obtain a boundary of the special flight area and then fly to avoid the boundary of the special flight area.

In an embodiment of the present invention, if there is a special flight area on the flight route, the unmanned aerial vehicle 10 sends a prompt warning to the intelligent terminal 40 or the intelligent terminal 40 actively displays a prompt warning to the user 30, so as to inform the user 30 that there is a special flight area on the flight route. The user 30 may choose to replan a new route or select another flight path to avoid the special flight area. If the number of times a prompt warning is sent exceeds a preset number of times or a time for which a prompt warning lasts reaches a preset time threshold, the unmanned aerial vehicle 10 automatically adjusts a flight policy to avoid the special flight area.

An embodiment of the present invention further provides a path planning apparatus for an unmanned aerial vehicle. The path planning apparatus is used for the electronic device 20, the intelligent terminal 40 or the unmanned aerial vehicle 10 in FIG. 1. As shown in FIG. 6, the apparatus 200 includes:
a determining module 201, configured to determine a start point and an end point of flight of the unmanned aerial vehicle; and
to determine a flight route of the unmanned aerial vehicle based on the start point and the end point;
an obtaining module 202, configured to obtain a height of an obstacle on the flight route;
a judging module 203, configured to determine whether a height at which the unmanned aerial vehicle is capable of flying is greater than the height of the obstacle; and
a control module 204, configured to control the unmanned aerial vehicle to fly at a height greater than the height of the obstacle according to the flight route.

When the apparatus is used for the unmanned aerial vehicle, the determining module 201, the obtaining module 202 and the judging module 203 may be processors in the unmanned aerial vehicle and the control module 204 may be a flight control chip of the unmanned aerial vehicle.

This embodiment of the present invention, by obtaining height information of an obstacle on a flight route of an unmanned aerial vehicle and determining whether a height at which the unmanned aerial vehicle is capable of flying is greater than a height of the obstacle, if the height at which the unmanned aerial vehicle is capable of flying is greater than the height of the obstacle, control the unmanned aerial vehicle can fly at a height greater than the height of the obstacle according to the flight route, therefore, precisely control the unmanned aerial vehicle.

In some embodiments of the apparatus 200, the determining module 201 is specifically configured to:
obtain a flight map of the unmanned aerial vehicle; and
obtain the flight route of the unmanned aerial vehicle designed by a user according to the start point and the end point on the flight map.

In some embodiments of the apparatus 200, the determining module 201 is configured to:
obtain a flight track that is located between the start point and the end point and that is drawn by the user on the flight map; and
determine the flight route according to the start point, the end point and the flight track.

In some embodiments of the apparatus 200, the determining module 201 is configured to:
obtain at least one waypoint that is located between the start point and the end point and that is selected by the user on the flight map; and
determine the flight route according to the start point, the end point and the at least one waypoint.

In some embodiments of the apparatus 200, the judging module 203 is further configured to determine whether there is a special flight area on the flight route; and
if yes, the control module 204 controls the unmanned aerial vehicle to fly to avoid the special flight area.

In some embodiments of the apparatus 200, the obtaining module 202 is further configured to obtain a flight height of the special flight area; and the control module 204 is configured to control the unmanned aerial vehicle to fly at a height greater than or less than the height of the special flight area.

In some embodiments of the apparatus 200, the obtaining module 202 is further configured to obtain a boundary of the special flight area; and the control module 204 is configured to control the unmanned aerial vehicle to fly to avoid the boundary of the special flight area.

In some embodiments of the apparatus 200, a prompt warning is sent to a control terminal if the judging module 203 determines that there is a special flight area on the flight route.

In some embodiments of the apparatus 200, the obtaining module 202 obtains height information of the obstacle on the flight route by using a three-dimensional map.

In some embodiments of the apparatus 200, the determining module 201 is configured to:
obtain at least one path planning criterion; and
determine the flight route of the unmanned aerial vehicle based on the start point and the end point according to the at least one path planning criterion.

In some embodiments of the apparatus 200, the at least one path planning criterion includes at least one of the following criteria:
a minimum-energy criterion, a highest-flight-speed criterion, a highest-flight-safety criterion and a special-flight-area avoidance criterion.

In some embodiments of the apparatus 200, the at least one path planning criterion includes the special-flight-area avoidance criterion.

In some embodiments of the apparatus 200, the special flight area includes any of the following areas:
a no-fly zone, a height restricted area and an area that affects a flight task of the unmanned aerial vehicle.

In some embodiments of the apparatus 200, the judging module 203 is specifically configured to:
determine whether there is a height restricted area on the flight route;
if yes, determine whether a height of the height restricted area is greater than a maximum height of the obstacle on the flight route; and
if yes, determine that the height at which the unmanned aerial vehicle is capable of flying is greater than the height of the obstacle.

In some embodiments of the apparatus 200, the judging module 203 is specifically configured to:
determine whether a maximum height at which the unmanned aerial vehicle flies is greater than the height of the obstacle; and
if yes, determine that the height at which the unmanned aerial vehicle is capable of flying is greater than the height of the obstacle.

In some embodiments of the apparatus 200, the maximum height at which the unmanned aerial vehicle flies depends on a lifting force provided by an actuating apparatus of the unmanned aerial vehicle.

In some embodiments of the apparatus 200, the control module 204 controls the unmanned aerial vehicle to fly to avoid the obstacle laterally if the judging module 203 determines that the height at which the unmanned aerial vehicle is capable of flying is less than the height of the obstacle.

In some embodiments of the apparatus 200, the obstacle includes at least one of the following:
a building, a mountain, a tree, a forest and a signal tower.

For detailed descriptions about modules in the apparatus, refer to the foregoing description. Details are not described herein again.

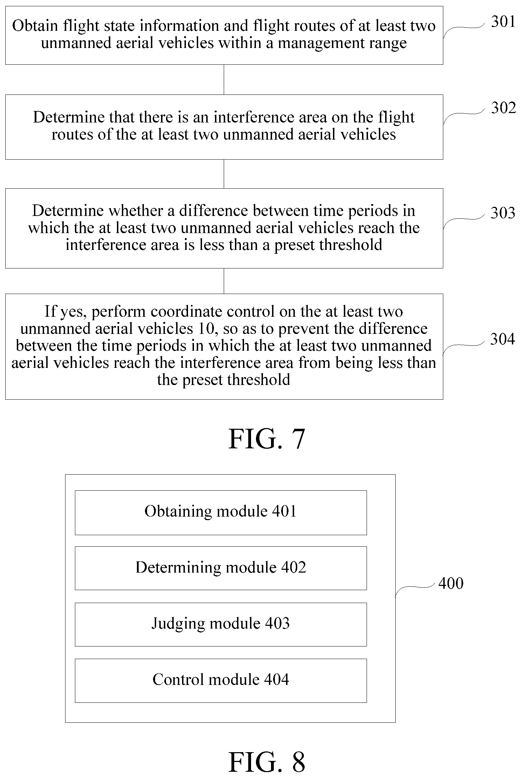

An embodiment of the present invention further provides a flight management method. The management method may be performed by the electronic device 20 in FIG. 1. As shown in FIG. 7, the method includes the following steps.

301: Obtain flight state information and flight routes of at least two unmanned aerial vehicles within a management range.

In an embodiment of the present invention, when a flight height of an unmanned aerial vehicle 10 is greater than a preset height threshold, the unmanned aerial vehicle 10 automatically enters a management range of the electronic device 20. When the flight height of the unmanned aerial vehicle 10 is greater than the preset height threshold, the unmanned aerial vehicle 10 sends a signal to the electronic device 20. After receiving the signal, the electronic device 20 obtains control permission on the unmanned aerial vehicle 10. It can be understood that, hardware of the unmanned aerial vehicle within the foregoing management range needs to support detection by the electronic device. Once the unmanned aerial vehicle 10 reaches a particular flight height, a function of a to-be-detected module carried in the unmanned aerial vehicle 10 is automatically enabled. Therefore, the unmanned aerial vehicle 10 automatically enters the management range of the electronic device 20. Within the management range, the electronic device possesses control permission on all unmanned aerial vehicles 10.

In an embodiment of the present invention, the flight route of the unmanned aerial vehicle 10 may be a flight route planned according to a path planning method for an unmanned aerial vehicle described in an embodiment of the present invention.

The electronic device 20 may receive, by using a signal transceiver, flight state information and/or a flight route of the unmanned aerial vehicle 10 sent by the unmanned aerial vehicle 10 by using an intelligent terminal 40. In some embodiments, the flight state information and/or the flight route may be directly sent by the unmanned aerial vehicle 10 to the electronic device 20. The flight state information includes location information, speed information and the like of the unmanned aerial vehicle 10, and the location information and the speed information may be obtained by using an airborne inertial device disposed on the unmanned aerial vehicle 10. The location information of the unmanned aerial vehicle 10 includes horizontal coordinate information (longitude, latitude and the like) and height information. The flight route may be sent by the unmanned aerial vehicle 10 or the intelligent terminal 40 to the electronic device 20, or may be obtained by the electronic device 20 by prediction according to the flight state information of the unmanned aerial vehicle 10. Optionally, the flight route may be obtained by the electronic device 20, the unmanned aerial vehicle 10 or the intelligent terminal 40 based on a three-dimensional map.

302: Determine that there is an interference area on the flight routes of the at least two unmanned aerial vehicles.

That is, it is determined that there is an unmanned aerial vehicle 10 having a collision risk in the at least two unmanned aerial vehicles 10 monitored by the electronic device 20. In an embodiment of the present invention, the electronic device 20 may determine, by determining whether there are unmanned aerial vehicles 10 whose flight routes intersect or whose flight routes are close, whether there is an unmanned aerial vehicle 10 having a collision risk in the at least two unmanned aerial vehicles 10 monitored by the electronic device 20. Moreover, a safety distance of each unmanned aerial vehicle 10 may be determined with reference to the volume of the unmanned aerial vehicle 10 (volume information of the unmanned aerial vehicle 10 may be sent to the electronic device 20). If a distance between flight routes of two unmanned aerial vehicles 10 is less than a safety distance of one of the unmanned aerial vehicles 10, there is an interference area between the two unmanned aerial vehicles 10 and the interference area may be determined with reference to factors such as volumes and flight control errors of the unmanned aerial vehicles 10.

303: Determine whether a difference between time periods in which the at least two unmanned aerial vehicles reach the interference area is less than a preset threshold.

If there is an interference area, a time period in which each unmanned aerial vehicle 10 reaches the interference area along a flight route of the unmanned aerial vehicle 10 is obtained according to location information and speed information of the unmanned aerial vehicle 10. If time periods in which two unmanned aerial vehicles 10 reach the interference area are relatively close and a difference between the time periods is less than the preset threshold, there is a collision risk between the two unmanned aerial vehicles 10, that is, flight interferes with each other. The preset threshold is a minimum time interval ensuring that the foregoing two or more unmanned aerial vehicles 10 do not appear simultaneously in the foregoing interference area.

304: If yes, perform coordinate control on the at least two unmanned aerial vehicles 10, so as to prevent the difference between the time periods in which the at least two unmanned aerial vehicles reach the interference area from being less than the preset threshold.

In an embodiment of the present invention, the performing coordinate control on the at least two unmanned aerial vehicles 10 may be performing pre-warning prompt on two or more unmanned aerial vehicles 10 whose flight interferes with each other. If an unmanned aerial vehicle 10 is manipulated by a user, the user may be reminded to perform careful manipulation, thereby improving the safe flight awareness. If the pre-warning does not work, the electronic device 20 may further adjust a flight speed or a flight direction of one or more of the unmanned aerial vehicles 10, so that a difference between time periods in which the unmanned aerial vehicles reach the interference area is greater than or equal to the preset threshold, to avoid vehicle collision incidents. Alternatively, the electronic device 20 may not perform the pre-warning but directly adjust a flight speed or a flight direction of an unmanned aerial vehicle 10. A flight speed or a flight direction of an unmanned aerial vehicle 10 adopting an autonomous flight mode is preferentially adjusted. A flight direction changes a flight route of the unmanned aerial vehicle 10. Therefore, a flight speed of the unmanned aerial vehicle 10 is preferentially adjusted.

For example, if two or more unmanned aerial vehicles 10 whose flight interferes with each other all adopt the autonomous flight mode, flight speeds of the two or more unmanned aerial vehicles 10 may be controlled simultaneously, so that a difference between time periods in which the two or more unmanned aerial vehicles 10 reach the interference area satisfies a safe preset threshold. If in two or more unmanned aerial vehicles 10 whose flight interferes with each other, an unmanned aerial vehicle 10 adopts the autonomous flight mode and an unmanned aerial vehicle 10 is controlled by the user 30 in real time, a flight speed of only the unmanned aerial vehicle 10 in the autonomous flight mode is adjusted.

This embodiment of the present invention can avoid a vehicle collision incident of an unmanned aerial vehicle 10 to a large extent, so as to improve the flight safety of the aerial vehicle.

It should be noted that, the foregoing planning apparatus 200 may perform the corresponding planning method provided in the embodiments of the present invention and has corresponding functional modules for performing the method and beneficial effects. For technical details not specifically described in the embodiment of the planning apparatus, refer to the planning method provided in the embodiments of the present invention.

An embodiment of the present invention further provides a flight management apparatus. The management apparatus 400 is used for the electronic device 20 in FIG. 1. As shown in FIG. 8, the management apparatus 400 includes:
an obtaining module 401, configured to obtain flight state information and flight routes of at least two unmanned aerial vehicles within a management range;
a determining module 402, configured to determine that there is an interference area on the flight routes of the at least two unmanned aerial vehicles;
a judging module 403, configured to determine whether a difference between time periods in which the at least two unmanned aerial vehicles reach the interference area is less than a preset threshold; and
a control module 404, configured to perform coordinate control on the at least two unmanned aerial vehicles, so as to prevent the difference between the time periods in which the at least two unmanned aerial vehicles reach the interference area from being less than the preset threshold.

This embodiment of the present invention can avoid a vehicle collision incident of an unmanned aerial vehicle 10 to a large extent, so as to improve the flight safety of the aerial vehicle.

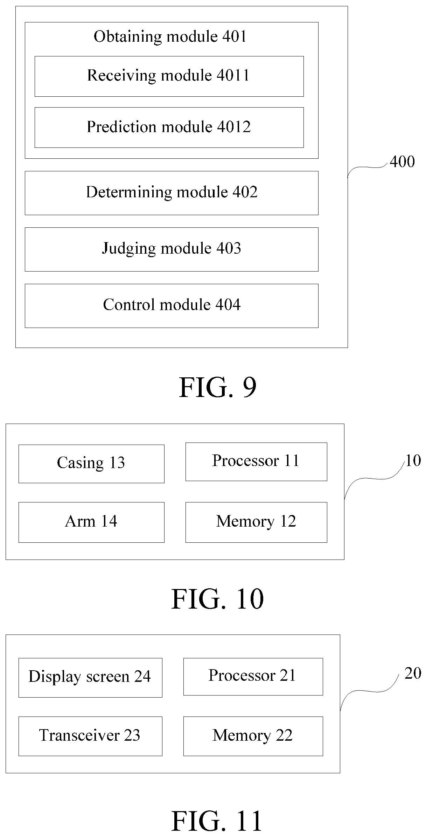

In some embodiments of the management apparatus 400, referring to FIG. 9, the obtaining module 401 further includes a receiving module 4011, the receiving module 4011 being configured to receive a flight route sent by each of the at least two unmanned aerial vehicles.

In some embodiments of the management apparatus 400, referring to FIG. 9, the obtaining module 401 includes a prediction module 4012, the prediction module 4012 being configured to predict a flight route of each of the at least two unmanned aerial vehicles according to the flight state information of the at least two unmanned aerial vehicles.

In some embodiments of the management apparatus 400, the obtaining module 401 is further configured to:
receive signals sent by the at least two unmanned aerial vehicles; and
obtain control permission on the at least two unmanned aerial vehicles.

In some embodiments of the management apparatus 400, the obtaining module 401 is specifically configured to:
receive signals sent by the at least two unmanned aerial vehicles when flight heights of the at least two unmanned aerial vehicles are greater than a preset height threshold.

In some embodiments of the management apparatus 400, the control module 404 is configured to:
perform coordinate control on speed magnitudes of the at least two unmanned aerial vehicles, so that the difference between the time periods in which the at least two unmanned aerial vehicles reach the interference area is greater than or equal to the preset threshold.

In some embodiments of the management apparatus 400, the control module 404 is configured to:
perform coordinate control on speed directions of the at least two unmanned aerial vehicles, so that the difference between the time periods in which the at least two unmanned aerial vehicles reach the interference area is greater than or equal to the preset threshold.

In some embodiments of the management apparatus 400, the flight state information includes location information and speed information.

It should be noted that, the foregoing management apparatus 400 used for the electronic device 20 may perform the corresponding management method provided in the embodiments of the present invention and has corresponding functional modules for performing the method and beneficial effects. For technical details not specifically described in the embodiment of the management apparatus, refer to the management method provided in the embodiments of the present invention.

FIG. 10 is a schematic diagram of a hardware structure of an unmanned aerial vehicle 10 according to an embodiment of the present invention. As shown in FIG. 10, the unmanned aerial vehicle 10 includes:
a shell 13;
an arm 14 connected to the shell;
a processor 11 disposed in the shell or the arm; and
a memory 12 in communication connection with the processor, the memory 12 being disposed in the shell 13 or the arm 14.

The processor 11 may be connected to the memory 12 by using a bus or in another manner.

As a non-volatile computer readable storage medium, the memory 12 may be configured to store a non-volatile software program, a non-volatile computer executable program and a module, for example, program instructions/units corresponding to the planning method in the embodiments of the present invention (for example, the determining module 201, the obtaining module 202, the judging module 203 and the control module 204 shown in FIG. 6). The processor 11 runs the non-volatile software program or instructions and units stored in the memory 12, so as to perform various functional applications and data processing of the unmanned aerial vehicle 10, that is, implement the path planning method for an unmanned aerial vehicle described in the foregoing embodiments.

The memory 12 may include a program storage area and a data storage area, where the program storage area may store an operating system and an application program required by at least one function; and the data storage area may store data created according to use of the unmanned aerial vehicle 10 or the like. Moreover, the memory 12 may include a high-speed random access memory and may further include a non-volatile memory, for example, at least one magnetic disk storage device, a flash memory device or another non-volatile solid-state storage device. In some embodiments, the memory 12 optionally includes memories disposed remotely relative to the processor 11 and these remote memories may be connected to the unmanned aerial vehicle 10 by using a network.

The one or more modules are stored in the memory 12. When being executed by the one or more processors 11, the one or more modules perform the planning method in any of the foregoing method embodiments, for example, perform the method steps 101 to 105 in FIG. 2, 1021a to 1022a in FIG. 3, 1021b to 1022b in FIG. 4 and 107 and 108 in FIG. 5 described above and implement functions of the modules 201 to 204 in FIG. 6.

The foregoing unmanned aerial vehicle 10 may perform the planning method provided in the embodiments of the present invention and has corresponding functional modules for performing the method and beneficial effects. For technical details not specifically described in the embodiment of the aerial vehicle 10, refer to the planning method provided in the embodiments of the present invention.

An embodiment of the present invention provides a non-volatile computer readable storage medium, the computer readable storage medium stores computer executable instructions and the computer executable instructions are executed by one or more processors, to perform, for example, the method steps 101 to 105 in FIG. 2, 1021a to 1022a in FIG. 3, 1021b to 1022b in FIG. 4 and 107 and 108 in FIG. 5 described above and implement functions of the modules 201 to 204 in FIG. 6.

FIG. 11 is a schematic diagram of a hardware structure of a flight management apparatus 20 (for example, the electronic device 20 in FIG. 1) according to an embodiment of the present invention. As shown in FIG. 11, the flight management apparatus 20 includes:
a main body;
a display screen 24 disposed on the main body;
a processor 21 disposed in the main body;
a transceiver 23 in communication connection with the processor 21; and
a memory 22 in communication connection with the processor 21.

The processor 21 may be connected to the memory 22 by using a bus or in another manner.

As a non-volatile computer readable storage medium, the memory 22 may be configured to store a non-volatile software program, a non-volatile computer executable program and a module, for example, program instructions/units corresponding to the management method in the embodiments of the present invention (for example, the obtaining module 401, the determining module 402, the judging module 403 and the control module 404 shown in FIG. 8). The processor 21 runs the non-volatile software program or instructions and units stored in the memory 22, so as to perform various functional applications and data processing of the flight management system 20, that is, implement the flight management method described in the foregoing embodiments.

The memory 22 may include a program storage area and a data storage area, where the program storage area may store an operating system and an application program required by at least one function; and the data storage area may store data created according to use of the flight management system 20 or the like. Moreover, the memory 22 may include a high-speed random access memory and may further include a non-volatile memory, for example, at least one magnetic disk storage device, a flash memory device or another non-volatile solid-state storage device. In some embodiments, the memory 22 optionally includes memories disposed remotely relative to the processor 21 and these remote memories may be connected to the flight management system by using a network. Examples of the foregoing network include but are not limited to the Internet, an intranet, a local area network, a mobile communications network and a combination thereof.

The one or more units are stored in the memory 22. When being executed by the one or more processors 21, the one or more units perform the management method in any of the foregoing method embodiments, for example, perform the method steps 301 to 304 in FIG. 7 and implement functions of the modules 401 to 404 in FIG. 8 and the modules 401 to 404 and 4011 and 4012 in FIG. 9 described above.

The foregoing flight management system 20 may perform the management method provided in the embodiments of the present invention and has corresponding functional modules for performing the method and beneficial effects. For technical details not specifically described in the embodiment of the flight management system 20, refer to the management method provided in the embodiments of the present invention.

The flight management apparatus 20 of this embodiment of the present invention exists in a plurality of forms, including but being not limited to:
(1) Mobile communications device: such a device is characterized by having a mobile communication function and is mainly responsible for providing voice and data communication. Such a terminal includes: a smartphone (for example, an iPhone), a multimedia mobile phone, a feature phone, a low-end mobile phone and the like.
(2) Ultra mobile personal computer device: such a device falls within a personal computer, has computing and processing functions and generally also has a mobile Internet access characteristic. Such a terminal includes: a PDA, a MID and a UMPC device, for example, an iPad.
(3) Portable entertainment device: such a device may display and play multimedia content. Such a device includes: an audio and video player (for example, an iPod), a handheld game console, an electronic book, an intelligent toy and a portable vehicle-mounted navigation device.
(4) Server: the server is a device providing a computing service and includes components such as a processor, a hard disk, a memory and a system bus. The server has an architecture similar to that of a general-purpose computer, but has higher requirements on aspects such as the processing capability, stability, reliability, safety, extensibility and manageability because it needs to provide a highly reliable service.

An embodiment of the present invention further provides a non-volatile computer readable storage medium, the computer readable storage medium stores computer executable instructions and the computer executable instructions are executed by one or more processors, to perform, for example, the method steps 301 to 304 in FIG. 7 and implement functions of the modules 401 to 404 in FIG. 8 and the modules 401 to 404 and 4011 and 4012 in FIG. 9 described above.

The foregoing apparatus embodiments are merely exemplary and units described as separate components may be or may not be physically separated. Components shown as units may be or may not be physical units, that is, may be integrated or distributed to a plurality of network units. A part of or all of the modules may be selected according to the actual needs to achieve the objectives of the solutions of the embodiments.

Through the descriptions of the preceding embodiments, persons of ordinary skill in the art may understand that the implementations may be implemented by using hardware only or by using software and a universal hardware platform. Persons of ordinary skill in the art should understand that all or a part of the processes of the method according to the embodiments of the present invention may be implemented by a program instructing relevant hardware. The program may be stored in a computer readable storage medium. When the program is run, the processes of the method according to the embodiments of the present invention are performed. The storage medium may be a magnetic disk, an optical disc, a read-only memory (ROM), or a random access memory (RAM).

Finally, it should be noted that, the foregoing embodiments are merely used for illustrating rather than limiting the technical solutions of the present invention. According to the idea of the present invention, technical features in the foregoing embodiments or in different embodiments may also be combined. Steps may be implemented in any order and there exist many other changes in different aspects of the present invention described above. For brevity, the changes are not provided in details. Although the present invention is described in detail with reference to the foregoing embodiments, persons of ordinary skill in the art should understand that they may still make modifications to the technical solutions described in the foregoing embodiments or make equivalent substitutions to some technical features thereof, without departing from the scope of the technical solutions of the embodiments of the present invention.

## Claims

1. A path planning method for an unmanned aerial vehicle, wherein the method comprises:
determining a start point and an end point of flight of the unmanned aerial vehicle;
determining a flight route of the unmanned aerial vehicle based on the start point and the end point;
obtaining a height of an obstacle on the flight route;
determining whether a height at which the unmanned aerial vehicle is capable of flying is greater than the height of the obstacle; and
if yes, flying, by the unmanned aerial vehicle, at a height greater than the height of the obstacle according to the flight route.

2. The method according to claim 1, wherein the determining a flight route of the unmanned aerial vehicle based on the start point and the end point comprises:
obtaining a flight map of the unmanned aerial vehicle; and
obtaining the flight route of the unmanned aerial vehicle designed by a user according to the start point and the end point on the flight map.

3. The method according to claim 2, wherein the obtaining the flight route of the unmanned aerial vehicle designed by a user according to the start point and the end point on the flight map comprises:
obtaining a flight track that is located between the start point and the end point and that is drawn by the user on the flight map; and
determining the flight route according to the start point, the end point and the flight track.

4. The method according to claim 2, wherein the obtaining the flight route of the unmanned aerial vehicle designed by a user according to the start point and the information on the flight map comprises:
obtaining at least one waypoint that is located between the start point and the end point and that is selected by the user on the flight map; and
determining the flight route according to the start point, the end point and the at least one waypoint.

5. The method according to any of claims 1 to 4, wherein the method further comprises:
determining whether there is a special flight area on the flight route; and
if yes, flying, by the unmanned aerial vehicle, to avoid the special flight area.

6. The method according to claim 5, wherein the flying, by the unmanned aerial vehicle, to avoid the special flight area comprises:
obtaining a height of the special flight area; and
flying, by the unmanned aerial vehicle, at a height greater than or less than the height of the special flight area.

7. The method according to claim 5, wherein the flying, by the unmanned aerial vehicle, to avoid the special flight area comprises:
obtaining a boundary of the special flight area; and
flying, by the unmanned aerial vehicle, to avoid the boundary of the special flight area.

8. The method according to any of claims 5 to 7, wherein the method further comprises:
sending a prompt warning to a control terminal if there is a special flight area on the flight route.

9. The method according to claim 1, wherein the obtaining a height of an obstacle on the flight route comprises:
obtaining the height of the obstacle on the flight route by using a three-dimensional map.

10. The method according to claim 1, wherein the determining a flight route of the unmanned aerial vehicle based on the start point and the end point comprises:
obtaining at least one path planning criterion; and
determining the flight route of the unmanned aerial vehicle based on the start point and the end point according to the at least one path planning criterion.

11. The method according to claim 10, wherein the at least one path planning criterion comprises at least one of the following criteria:
a minimum-energy criterion, a highest-flight-speed criterion, a highest-flight-safety criterion and a special-flight-area avoidance criterion.

12. The method according to claim 11, wherein the at least one path planning criterion comprises the special-flight-area avoidance criterion.

13. The method according to any of claims 5 to 8, 11 and 12, wherein the special flight area comprises any of the following areas:
a no-fly zone, a height restricted area and an area that affects a flight task of the unmanned aerial vehicle.

14. The method according to any of claims 1 to 13, wherein the determining whether a height at which the unmanned aerial vehicle is capable of flying is greater than the height of the obstacle comprises:
determining whether there is a height restricted area on the flight route;
if yes, determining whether a height of the height restricted area is greater than a maximum height of the obstacle on the flight route; and
if yes, determining that the height at which the unmanned aerial vehicle is capable of flying is greater than the height of the obstacle.

15. The method according to any of claims 1 to 14, wherein the determining whether a height at which the unmanned aerial vehicle is capable of flying is greater than the height of the obstacle comprises:
determining whether a maximum height at which the unmanned aerial vehicle flies is greater than the height of the obstacle; and
if yes, determining that the height at which the unmanned aerial vehicle is capable of flying is greater than the height of the obstacle.

16. The method according to claim 15, wherein the maximum height at which the unmanned aerial vehicle flies depends on a lifting force provided by an actuating apparatus of the unmanned aerial vehicle.

17. The method according to any of claims 1 to 16, wherein the method further comprises:
flying, by the unmanned aerial vehicle, to avoid the obstacle laterally if the height at which the unmanned aerial vehicle is capable of flying is less than the height of the obstacle.

18. The method according to any of claims 1 to 17, wherein the obstacle comprises at least one of the following:
a building, a mountain, a tree, a forest and a signal tower.

19. A path planning apparatus for an unmanned aerial vehicle, comprising:
a determining module, configured to determine a start point and an end point of flight of the unmanned aerial vehicle; and
to determine a flight route of the unmanned aerial vehicle based on the start point and the end point;
an obtaining module, configured to obtain a height of an obstacle on the flight route;
a judging module, configured to determine whether a height at which the unmanned aerial vehicle is capable of flying is greater than the height of the obstacle; and
a control module, configured to control the unmanned aerial vehicle to fly at a height greater than the height of the obstacle according to the flight route.

20. The apparatus according to claim 19, wherein the determining module is specifically configured to:
obtain a flight map of the unmanned aerial vehicle; and
obtain the flight route of the unmanned aerial vehicle designed by a user according to the start point and the end point on the flight map.

21. The apparatus according to claim 20, wherein the determining module is configured to:
obtain a flight track that is located between the start point and the end point and that is drawn by the user on the flight map; and
determine the flight route according to the start point, the end point and the flight track.

22. The apparatus according to claim 20, wherein the determining module is configured to:
obtain at least one waypoint that is located between the start point and the end point and that is selected by the user on the flight map; and
determine the flight route according to the start point, the end point and the at least one waypoint.

23. The apparatus according to any of claims 19 to 22, wherein the judging module is further configured to determine whether there is a special flight area on the flight route; and
if yes, the control module controls the unmanned aerial vehicle to fly to avoid the special flight area.

24. The apparatus according to claim 23, wherein the obtaining module is further configured to obtain a flight height of the special flight area; and the control module is configured to control the unmanned aerial vehicle to fly at a height greater than or less than the height of the special flight area.

25. The apparatus according to claim 23, wherein the obtaining module is further configured to obtain a boundary of the special flight area; and the control module is configured to control the unmanned aerial vehicle to fly to avoid the boundary of the special flight area.

26. The apparatus according to any of claims 23 to 25, wherein a prompt warning is sent to a control terminal if the judging module determines that there is a special flight area on the flight route.

27. The apparatus according to claim 19, wherein the obtaining module obtains height information of the obstacle on the flight route by using a three-dimensional map.

28. The apparatus according to claim 19, wherein the determining module is configured to:
obtain at least one path planning criterion; and
determine the flight route of the unmanned aerial vehicle based on the start point and the end point according to the at least one path planning criterion.

29. The apparatus according to claim 28, wherein the at least one path planning criterion comprises at least one of the following criteria:
a minimum-energy criterion, a highest-flight-speed criterion, a highest-flight-safety criterion and a special-flight-area avoidance criterion.

30. The apparatus according to claim 29, wherein the at least one path planning criterion comprises the special-flight-area avoidance criterion.

31. The apparatus according to any of claims 23 to 26, 29 and 30, wherein the special flight area comprises any of the following areas:
a no-fly zone, a height restricted area and an area that affects a flight task of the unmanned aerial vehicle.

32. The apparatus according to any of claims 19 to 31, wherein the judging module is specifically configured to:
determine whether there is a height restricted area on the flight route;
if yes, determine whether a height of the height restricted area is greater than a maximum height of the obstacle on the flight route; and
if yes, determine that the height at which the unmanned aerial vehicle is capable of flying is greater than the height of the obstacle.

33. The apparatus according to any of claims 19 to 32, wherein the judging module is specifically configured to:
determine whether a maximum height at which the unmanned aerial vehicle flies is greater than the height of the obstacle; and
if yes, determine that the height at which the unmanned aerial vehicle is capable of flying is greater than the height of the obstacle.

34. The apparatus according to claim 33, wherein the maximum height at which the unmanned aerial vehicle flies depends on a lifting force provided by an actuating apparatus of the unmanned aerial vehicle.

35. The apparatus according to any of claims 19 to 34, wherein
the control module controls the unmanned aerial vehicle to fly to avoid the obstacle laterally if the judging module determines that the height at which the unmanned aerial vehicle is capable of flying is less than the height of the obstacle.

36. The apparatus according to any of claims 19 to 35, wherein the obstacle comprises at least one of the following:
a building, a mountain, a tree, a forest and a signal tower.

37. A flight management method, wherein the method comprises:
obtaining flight state information and flight routes of at least two unmanned aerial vehicles within a management range;
determining that there is an interference area on the flight routes of the at least two unmanned aerial vehicles;
determining whether a difference between time periods in which the at least two unmanned aerial vehicles reach the interference area is less than a preset threshold; and
if yes, performing coordinate control on the at least two unmanned aerial vehicles, so as to prevent the difference between the time periods in which the at least two unmanned aerial vehicles reach the interference area from being less than the preset threshold.

38. The method according to claim 37, wherein the obtaining flight routes of at least two unmanned aerial vehicles within a management range comprises:
receiving a flight route sent by each of the at least two unmanned aerial vehicles.

39. The method according to claim 37 or 38, wherein the method further comprises:
receiving signals sent by the at least two unmanned aerial vehicles; and
obtaining control permission on the at least two unmanned aerial vehicles.

40. The method according to claim 39, wherein the receiving signals sent by the at least two unmanned aerial vehicles comprises:
receiving signals sent by the at least two unmanned aerial vehicles when flight heights of the at least two unmanned aerial vehicles are greater than a preset height threshold.

41. The method according to any of claims 37 to 40, wherein the performing coordinate control on the at least two unmanned aerial vehicles comprises:
performing coordinate control on speed magnitudes of the at least two unmanned aerial vehicles, so that the difference between the time periods in which the at least two unmanned aerial vehicles reach the interference area is greater than or equal to the preset threshold.

42. The method according to any of claims 37 to 40, wherein the performing coordinate control on the at least two unmanned aerial vehicles comprises:
performing coordinate control on speed directions of the at least two unmanned aerial vehicles, so that the difference between the time periods in which the at least two unmanned aerial vehicles reach the interference area is greater than or equal to the preset threshold.

43. The method according to any of claims 37 to 42, wherein the flight state information comprises location information and speed information.

44. A flight management apparatus, wherein the apparatus comprises:
an obtaining module, configured to obtain flight state information and flight routes of at least two unmanned aerial vehicles within a management range;
a determining module, configured to determine that there is an interference area on the flight routes of the at least two unmanned aerial vehicles;
a judging module, configured to determine whether a difference between time periods in which the at least two unmanned aerial vehicles reach the interference area is less than a preset threshold; and
a control module, configured to perform coordinate control on the at least two unmanned aerial vehicles, so as to prevent the difference between the time periods in which the at least two unmanned aerial vehicles reach the interference area from being less than the preset threshold.

45. The apparatus according to claim 44, wherein the obtaining module further comprises a receiving module, the receiving module being configured to receive a flight route sent by each of the at least two unmanned aerial vehicles.

46. The apparatus according to any of claims 44 to 46, wherein the obtaining module is further configured to:
receive signals sent by the at least two unmanned aerial vehicles; and
obtain control permission on the at least two unmanned aerial vehicles.

47. The apparatus according to claim 46, wherein the obtaining module is specifically configured to:
receive signals sent by the at least two unmanned aerial vehicles when flight heights of the at least two unmanned aerial vehicles are greater than a preset height threshold.

48. The apparatus according to any of claims 44 to 47, wherein the control module is configured to:
perform coordinate control on speed magnitudes of the at least two unmanned aerial vehicles, so that the difference between the time periods in which the at least two unmanned aerial vehicles reach the interference area is greater than or equal to the preset threshold.

49. The apparatus according to any of claims 44 to 47, wherein the control module is configured to:
perform coordinate control on speed directions of the at least two unmanned aerial vehicles, so that the difference between the time periods in which the at least two unmanned aerial vehicles reach the interference area is greater than or equal to the preset threshold.

50. The apparatus according to any of claims 45 to 51, wherein the flight state information comprises location information and speed information.

51. An unmanned aerial vehicle, comprising:
a shell;
an arm connected to the shell;
a processor disposed in the shell or the arm; and
a memory in communication connection with the processor, the memory being disposed in the shell or the arm, wherein
the memory stores instructions capable of being executed by the processor; and when the processor executes the instructions, the method according to any of claims 1 to 18 is implemented.

52. A non-volatile computer readable storage medium, wherein the computer readable storage medium stores computer executable instructions, the computer executable instructions, when executed by an unmanned aerial vehicle, causing the unmanned aerial vehicle to perform the method according to any of claims 1 to 18.

53. A flight management apparatus, comprising:
a main body;
a display screen disposed on the main body;
a processor disposed in the main body;
a transceiver in communication connection with the processor; and
a memory in communication connection with the processor, wherein
the memory stores instructions capable of being executed by the processor; and when the processor executes the instructions, the method according to any of claims 37 to 43 is implemented.

54. A computer program product, wherein the computer program product comprises a computer program stored in a non-volatile computer readable storage medium, and the computer program comprises program instructions, the program instructions, when executed by a flight management system, causing the flight management system to perform the method according to any of claims 37 to 43.
